# NEUE EUROPÄISCHE PATENTSCHRIFT

(11) **EP 1 952 030 B2**
(45) Veröffentlichungstag und Bekanntmachung des Hinweises auf die Entscheidung über den Einspruch: **21.01.2015**
(45) Hinweis auf die Patenterteilung: 09.12.2009
(21) Anmeldenummer: 06806513.5
(22) Anmeldetag: 25.10.2006
(51) Int. Cl.: F04D 29/62, B23P 19/02, F01D 25/28, F04D 17/12

(54) **VORRICHTUNG ZUR SEITLICHEN MONTAGE UND DEMONTAGE EINES KOMPRESSORBARRELS**
DEVICE FOR THE LATERAL FITTING AND REMOVAL OF A COMPRESSOR BARREL
DISPOSITIF DE MONTAGE ET DE DEMONTAGE LATERAL D'UN TAMBOUR DE COMPRESSEUR

(30) Priorität: 28.10.2005 DE 102005052077
(43) Veröffentlichungstag der Anmeldung: 06.08.2008
(73) Patentinhaber: MAN Diesel & Turbo SE, 86153 Augsburg (DE)
(72) Erfinder: ZIEKOW, Christian, 13503 Berlin (DE); MICHLIGK, Thomas, 13467 Berlin (DE)
(86) Internationale Anmeldenummer: PCT/EP2006/010256
(87) Internationale Veröffentlichungsnummer: WO 2007/048584

(56) Entgegenhaltungen:
- DE-A1- 2 656 826
- DE-A1- 19 919 650
- DE-U1- 29 719 605
- JP-A- 10 220 399
- US-A- 1 923 126
- US-A- 3 150 820

## Beschreibung

Die Erfindung betrifft eine Vorrichtung zur seitlichen Montage und Demontage eines Kompressorbarrels eines Turbokompressors in ein oder aus einem Gehäuse, das vertikal geteilt ist, mit den Merkmalen des Oberbegriffes des Anspruches 1.

Turbokompressoren mit einem vertikal geteilten Gehäuse werden besonders für höhere Gasdrücke eingesetzt. Die aus der Praxis bekannten Montagevorrichtungen für Turbokompressoren mit horizontalen Stutzen verwenden eine Führung, die - von der Antriebsseite her in das Gehäuse des Turbokompressors geführt - das vollständige Kompressorbarrel in horizontaler Lage im Gleichgewicht hält, während auf der Nichtantriebsseite eine axial gleitende Abstützung zum Grundrahmen oder zum Grundrahmen erfolgt. Das so unterstützte, vollständige, aus dem Innenteilpaket mit Dichtungen und dem in den Lagern liegendem Rotor bestehende Kompressorbarrel wird dann axial eingebaut oder herausgezogen.

Eine andere Montagevorrichtung nutzt statt der beschriebenen Abstützung einen vorhandenen Kran zur Aufrechterhaltung des Gleichgewichts. Dabei wird ein Seil um das Kompressorbarrel gelegt und durch den Kran gehalten. Dies erfordert ein wiederholtes Umsetzen der Seillage mit der Gefahr einer Havarie.

Beide zuvor beschriebenen Montagevorrichtungen setzen voraus, dass das komplette Kompressorbarrel gezogen wird. Die beschriebenen Montagevorrichtungen sind nicht anwendbar, wenn das Kompressorbarrel unvollständig, das heißt ohne das antriebsseitige Lager gezogen werden muss. In dem Fall ist der Rotor antriebsseitig nicht unterstützt.

Weitere ähnliche Vorrichtungen sind aus DE 199 19 650 A1 und DE 26 56 826 A1, die als nächstliegender Stand der Technik angesehen sind, oder aus JP 10 220 399 A bekannt.

Der Erfindung liegt die Aufgabe zugrunde, eine Vorrichtung zur Montage und Demontage eines Kompressorbarrels zu schaffen, bei dem der Rotor einseitig auf der Antriebsseite nicht durch das bereits demontierte Radiallager unterstützt wird und der Rotor während der Montage und der Demontage im Gleichgewicht gehalten werden muss.

Die Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind Gegenstand der Unteransprüche.

Mit Hilfe des auf dem Kompressorgehäuse abgestützten Tragarms und der mit dem Lagerbock verbundenen Stützeinrichtung kann das Kompressorbarrel von einer Seite her im Gleichgewicht gehalten werden, auch wenn der Rotor noch nicht oder nicht mehr auf der anderen Seite in einem Radiallager gehalten ist. Dies ist besonders dann von Vorteil, wenn wegen der horizontalen Lage vom Ansaug- und Druckstutzen am Kompressorgehäuse keine seitlichen Führungsschienen für die Montagevorrichtung angebracht werden können und auf der Antriebsseite des Turbokompressors die Zugänglichkeit durch die konstruktive Ausführung des an das Kompressorgehäuse angeschmiedeten Bodens eingeschränkt ist.

Ein Ausführungsbeispiel der Erfindung ist in der Zeichnung dargestellt und wird im Folgenden näher erläutert. Es zeigen
- Fig. 1: einen Längsschnitt durch einen Turbokompressor mit einer Montage-/Demontagevorrichtung und
- Fig. 2: die Seitenansicht zu Fig. 1.

Die Zeichnung zeigt einen mehrstufigen Turbokompressor mit einem vertikal geteilten Gehäuse 1 in einem Zustand, in dem sich das Kompressorbarrel 2 unmittelbar vor dem Einbau oder unmittelbar nach dem Ausbau außerhalb des Gehäuses '1 befindet.

Das Gehäuse 1 des Turbokompressors weist eine vertikale Teilfuge 3 auf und ist auf einer Seite durch einen angeschmiedeten Boden 4 einseitig geschlossen. An dieser Seite des Turbokompressors ist der nicht gezeigte Kompressorantrieb vorgesehen. Der Boden 4 nimmt ein Lager zur Lagerung des später beschriebenen Rotors 9 auf. Das Gehäuse 1 ruht mit Gehäusefüßen 5 auf einem Grundrahmen 6 auf. An das Gehäuse 1 sind ein Saugstutzen 7 und ein Druckstutzen 8 angeschlossen. Die beiden Stutzen 7, 8 befinden sich bei dem dargestellten Ausführungsbeispiel in der horizontalen Mittelebene des Gehäuses 1. Je nach Anforderung können die beiden Stutzen 7, 8 auch in den unteren zwei Dritteln des Gehäuseumfanges in einer Stellung zwischen der 2-Uhr- und der 10-Uhr-Position angeordnet sein.

Das Kompressorbarrel 2 ist so dargestellt, als sei es für den Einbau in das Gehäuse 1 bereits montiert. Es besteht aus einem Rotor 9 mit einer Welle und auf der Welle drehfest angeordneten Laufrädern 10. Der Rotor 9 ist in ein stationäres Innenteilpaket 11 eingelegt. Dieses Innenteilpaket 11 besteht aus Scheiben 12, die die Laufräder 10 des Rotors 9 umschließen und interne Umführungskanäle zwischen den Laufrädern 10 und zu den Stutzen 7, 8 begrenzen. Die einzelnen Scheiben 12 sind horizontal geteilt und miteinander verschraubt. An die erste Scheibe 12 des Kompressorbarrels 2 ist ein Deckel 13 angeschraubt. Das Kompressorbarrel 2 umfasst ferner einen Lagerbock 14 mit Lagern zur Lagerung eines Endes des Rotors 9.

Für die Montage oder Demontage ist mit dem Deckel 13 des Kompressorbarrels 2 seitlich ein Tragarm 15 lösbar verbunden.

Der Tragarm 15 erstreckt sich oberhalb des Kompressorbarrels 2 in dessen Längsrichtung und ist so lang bemessen, dass er über das Innenteilpaket 11 hinausragt. An dem freien Ende des Tragarms 15 ist eine Rolle 16 angebracht. Die Rolle 16 kann bis zu einer Stellung 16' auf einer Laufbahn 17 abrollen, die auf dem Gehäuse 1 des Turbokompressors oberhalb des Saugstutzens 7 und des Druckstutzens 8 verlegt ist. Auf der dem Tragarm 15 zugewandten Seite der Laufbahn 17 ist an dem Gehäuse 1 ein Anschlag 18 vorgesehen, der ein Zurückrollen der Rolle 16 über den Rand des Gehäuses 1 verhindert. Über den Tragarm 15 ist das Kompressorbarrel 2 auf dem Gehäuse 1 axial verschiebbar abgestützt.

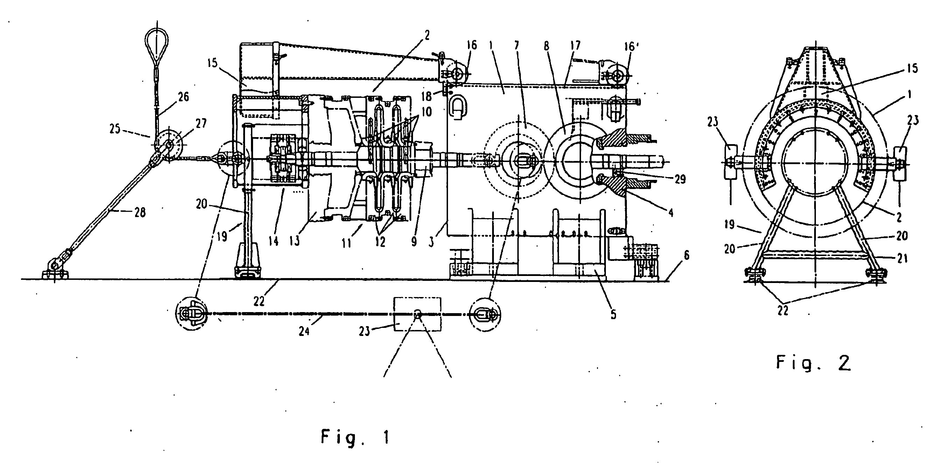

Mit dem Lagerbock 14 des Kompressorbarrels 2 ist lösbar eine Stützeinrichtung 19 verbunden. Die in Fig. 2 näher zu erkennende Stützeinrichtung 19 besteht aus zwei schräg gestellten Stützen 20, die durch einen Quersteg 21 miteinander verbunden sind. Unterhalb jeder Stütze 20 der Stützeinrichtung 19 befindet sich eine Gleitbahn 22, über die die Stützeinrichtung 19 in Längsrichtung des Kompressorbarrels 2 abgestützt und zu verschieben ist.

Seitlich neben dem Turbokompressor ist auf beiden Seiten je ein Hubzug 23 angebracht. Das flexible Zugmittel 24 des Hubzuges 23 ist einerseits mit dem Tragarm 15 und andererseits mit dem Gehäuse 1 lösbar verbunden.

An die Stützeinrichtung 19 greift zum Zwecke der Demontage ein Seilzug 25 an. Seil 26 dieses Seilzuges 25 ist um eine Seilrolle 27 zu einem nicht dargestellten, außerhalb des Turbokompressors liegenden Seilantrieb geführt. Die Seilrolle 27 ist in einer auf dem Grundrahmen 6 verankerten Pendelstütze 28 drehbar gelagert. Die Führung des Seiles 26 des beschriebenen Seilzuges 25 ist so gewählt, dass der Abschnitt des Seiles 26 zwischen der Stützeinrichtung 19 und dem Umlenkpunkt des Seiles 26 um die Seilrolle 27 in der Längsachse des Kompressorbarrels 2 liegt.

Zur Vorbereitung der Montage oder zum Abschluss der Demontage wird das Kompressorbarrel 2 auf einem Prismenbock befestigt, um eine sichere Lagerung des Kompressorbarrels 2 während des Anbaus oder des Abbaus des Tragarms 15 und der Stützeinrichtung 19 zu gewährleisten. Vor dem Einbau in das Gehäuse 1 wird das Kompressorbarrel 2 so ausgerichtet, dass seine Längsachse in der Verlängerung der Längsachse des Gehäuses 1 zu liegen kommt, dass das dem Tragarm 15 abgewandte Ende des Rotors 9 in das Gehäuse 1 hineinragt und dass die Rolle 16 des Tragarms 15 auf der Laufbahn 17 auf dem Gehäuse 1 hinter dem Anschlag 18 aufsitzt. Über eine Betätigung der Hubzüge 23 werden der Tragarm 15 und die Stützeinrichtung 19 mit dem Kompressorbarrel 2 axial verschoben, bis das Kompressorbarrel 2 in dem Gehäuse 1 die vorgesehene Stellung eingenommen hat. Während des Einschiebens des Kompressorbarrels 2 in das Gehäuse 1 sorgt eine temporäre Führung 29 innerhalb des Bodens 4 des Gehäuses 1 für eine sichere Auflage des Rotors 9. Die temporäre Führung 29 wird später durch ein Lager ersetzt. Bei der Demontage wird das Kompressorbarrel 2 über den Seilzug 25 herausgezogen.

## Patentansprüche

1. Vorrichtung zur seitlichen Montage und Demontage eines Kompressorbarrels (2) eines Turbokompressors in ein oder aus einem Gehäuse (1) des Turbokompressors, wobei das Kompressorbarrel (2) aus einem Innenteilpaket (11) mit miteinander und mit einem Deckel (13) verschraubten, horizontal geteilten Scheiben (12), aus einem Lagerbock (14) mit Lagern und aus einem in das Innenteilpaket (11) eingelegten Rotor (9) besteht und wobei das Gehäuse (1) vertikal geteilt und mit einem Saugstutzen (7) und einem Druckstutzen (8) im Bereich der unteren zwei Drittel des Gehäuseumfangs versehen ist,
**dadurch gekennzeichnet, dass**
die Vorrichtung einen Tragarm (15) und eine Stützeinrichtung (19) umfasst, wobei mit dem Deckel (13) des Kompressorbarrels (2) der Tragarm (15) lösbar verbunden ist und dass sich der Tragarm (15) oberhalb des Kompressorbarrels (2) in dessen Längsrichtung erstreckt und verschiebbar an dem Gehäuse (1) des Turbokompressors abgestützt ist und dass an dem Lagerbock (14) die Stützeinrichtung (19) lösbar befestigt ist und dass die Stützeinrichtung (19) in Längsrichtung des Kompressorbarrels (2) verschiebbar angeordnet ist.

2. Vorrichtung nach Anspruch 1, **dadurch gekennzeichnet, dass** zu beiden Seiten des Turbokompressors ein Hubzug (23) angeordnet ist und dass jeweils das eine Ende der Hubzüge (23) mit dem Tragarm (15) und das andere Ende mit dem Gehäuse (1) verbunden ist.

3. Vorrichtung nach Anspruch 1 oder 2, **dadurch gekennzeichnet, dass** an die Stützeinrichtung (19) in Richtung der Längsachse des Kompressorbarrels (2) ein außerhalb des Turbokompressors angeordneter Seilzug (25) angreift.

4. Vorrichtung nach einem der Ansprüche 1 bis 3, **dadurch gekennzeichnet, dass** an dem freien, dem Deckel (13) abgewandten Ende des Tragarms (15) eine Rolle (16) angeordnet ist, dass die Rolle 16 auf einer Laufbahn (17) geführt ist und dass die Laufbahn (17) an dem Gehäuse (1) des Turbokompressors oberhalb der Saug- und Druckstutzen (7, 8) angebracht ist.

5. Vorrichtung nach Anspruch 4, **dadurch gekennzeichnet, dass** an der Laufbahn (17) ein Anschlag (18) zur Begrenzung der Verschiebung des Tragarms (15) vorgesehen ist.

6. Vorrichtung nach einem der Ansprüche 1 bis 5, **dadurch gekennzeichnet, dass** eine temporäre Führung (29) im Boden (4) des Gehäuses (1) vorgesehen ist.

## Claims

1. A device for the lateral fitting and removal of a compressor barrel (2) of a turbocompressor in or from a housing (1) of the turbocompressor, wherein the compressor barrel (2) consists of an inner stack section (11) having horizontally split discs (12) screwed together and to a cover (13), of a bearing block (14) having bearings, and of a rotor (9) which is inserted into the inner stack section (11), and wherein the housing (1) is split vertically and is provided with a suction connection piece (7) and a pressure connection piece (8) in the region of the lower two thirds of the housing periphery,
**characterised in that**
the device comprises a supporting arm (15) and a supporting device (19), wherein the supporting arm (15) is releasably connected to the cover (13) of the compressor barrel (2), and **in that** the supporting arm (15) extends above the compressor barrel (2) in the longitudinal direction thereof and is displaceably supported on the housing (1) of the turbocompressor, and **in that** the supporting device (19) is releasably fastened to the bearing block (14) and **in that** the supporting device (19) is displaceably arranged in the longitudinal direction of the compressor barrel (2).

2. A device according to claim 1, **characterised in that** a stroke traction device (23) is arranged on both sides of the turbocompressor, and **in that** in each case one end of the stroke traction devices (23) is connected to the supporting arm (15) and the other end is connected to the housing (1).

3. A device according to claim 1 or 2, **characterised in that** a cable traction device (25) that is arranged outside the turbocompressor acts on the supporting device (19) in the direction of the longitudinal axis of the compressor barrel (2).

4. A device according to one of claims 1 to 3, **characterised in that** a roller (16) is arranged at the free end of the supporting arm (15) that is remote from the cover (13), **in that** the roller 16 is guided on a runway (17), and **in that** the runway (17) is provided on the housing (1) of the turbocompressor above the suction and pressure connection pieces (7, 8).

5. A device according to claim 4, **characterised in that** a stop (18) is provided on the runway (17) in order to limit the displacement of the supporting arm (15).

6. A device according to one of claims 1 to 5, **characterised in that** a temporary guide (29) is provided in the base (4) of the housing (1).

## Revendications

1. Dispositif de montage et de démontage latéral d'un tambour (2) de turbocompresseur dans le boîtier (1) du turbocompresseur, le tambour (2) se composant d'un paquet de pièces internes (11) formées de disques (12) divisés horizontalement et vissés avec un couvercle (13), d'un bloc palier (14) muni d'un palier ainsi que d'un rotor (9) inséré dans le paquet de pièces internes (11), et le boîtier (1) est divisé verticalement, et il est muni d'un ajutage d'aspiration (7) et d'un ajutage de refoulement (8) dans la zone des deux tiers inférieurs de la périphérie du boîtier,
**caractérisé en ce que**
le dispositif comporte un bras de support (15) et une installation de support (19),
- le bras de support (15) étant relié de manière amovible au couvercle (13) du tambour de compresseur (2),
- et que le bras de support (15) s'étend au-dessus du tambour de compresseur (2) dans sa direction longitudinale et il est appuyé de façon coulissante contre le boîtier (1) du turbocompresseur,
- et que l'installation de support (19) est fixée de manière amovible au bloc palier (14), et
- que l'installation de support (19) est coulissante dans la direction longitudinale du tambour de compresseur (2).

2. Dispositif selon la revendication 1,
**caractérisé par**
un moyen de levage (23) prévu des deux côtés du turbocompresseur, et une extrémité respective du moyen de levage (23) est reliée au bras de support (15) et l'autre extrémité est reliée au boîtier (1).

3. Dispositif selon la revendication 1 ou 2,
**caractérisé en ce que**
l'installation de support (19) agit sur un câble de traction (25) prévu à l'extérieur du turbocompresseur, dans la direction de l'axe longitudinal du tambour (2) du turbocompresseur.

4. Dispositif selon les revendications 1 à 3,
**caractérisé en ce qu'**
un galet (16) est prévu à l'extrémité libre du bras de support (15), du côté non situé vers le couvercle (13),
- le galet (1.6) est guidé sur un chemin de roulement (17), et
- le chemin de roulement (17) est installé sur le boîtier (1) du turbocompresseur, au-dessus des ajutages d'aspiration et de refoulement (7, 8).

5. Dispositif selon la revendication 4,
**caractérisé en ce que**
le chemin de roulement (17) comporte une butée (18) pour limiter la translation du bras de support (15).

6. Dispositif selon les revendications 1 à 5,
**caractérisé par**
un moyen de guidage temporaire (29) prévu dans le fond (4) du boîtier (1).
